# EUROPEAN PATENT SPECIFICATION

(11) **EP 0 768 585 B1**
(45) Date of publication and mention of the grant of the patent: **12.08.1998**
(21) Application number: 96202782.7
(22) Date of filing: 08.10.1996
(51) Int. Cl.: G05B 19/18

(54) **Operating unit for intermittent drives**
Betriebseinheit für Schrittantriebe
Unité d'opération pour moteur pas-à-pas

(30) Priority: 11.10.1995 IT MI952068
(43) Date of publication of application: 16.04.1997
(73) Proprietor: DUPLOMATIC S.r.l., I-21052 Busto Arsizio, Varese (IT)
(72) Inventor: De Bernardi, Franco, 21052 Busto Arsizio, Varese (IT)
(74) Representative: Perani, Aurelio

(56) References cited:
- DE-A- 3 144 032
- US-A- 4 989 376

## Description

The present invention relates to an operating unit for intermittent drives in general.

The term "intermittent drive" refers, within the scope of the present patent description, to a system of mechanical elements designed to execute angular or linear movements of programmable magnitude with predetermined acceleration, velocity and deceleration.

Intermittent drives are also frequently associated with controls for auxiliary functions such as the locking and movement of other elements.

The applications in which such intermittent drives are used are, for example, those of the rotation and positioning of machine-tool turrets, the angular or linear movement of worktables, and the operation of tool changers in automatic machining centres

In the known art, intermittent drives essentially comprise at least one stationary element made integral with the machine tool or machining centre, an element which can be moved between different operating positions spaced apart angularly or linearly, a mechanism for locking and releasing the moving element with respect to the stationary element, motor means to move the moving element from one operating position to another, motor means to operate the said locking and release mechanism, and finally electronic operating and control means to operate the motor means and to coordinate them in the sequence required by the operating program of the intermittent drive.

According to the known art, the various structural elements of the intermittent drive are positioned with respect to each other in a configuration in which the element forming the intelligence of the device, in other words the components designed to operate and control the motor means, are separated from the mechanical system, are selected freely by the user, and are sometimes positioned at such a distance from the intermittent drive unit itself that lengthy and complex wiring systems are required.

They also require a considerable amount of fine tuning of the operating program for satisfactory adaptation of the operating and control equipment to the mechanical device.

US-A-4 989 376 shows a retrofitted assembly for controlling the grinding steps of a grinder via its cross shaft. It is packaged in three different entities and the end user has a variety of control options that may be activated by means of the control panel.

The object of the present invention is to overcome the disadvantages mentioned previously by having the electronic operating and control equipment, forming the intelligence of the device, installed within the intermittent drive in such a way that the selection of the components and the operating software, as well as the optimization of the control parameters, is not left to the end user, and lengthy and complex wiring systems are eliminated.

This and other objects which will be made clear by the following description are achieved by the operating unit for intermittent drives of the type specified above, which is characterized in that it comprises a box-shaped housing in which are fitted at least the electric motor for operating the intermittent drive, together with the electronic operating and control components, the said box-shaped housing being connectable mechanically to the intermittent drive.

The invention will now be described more fully with reference to the attached drawing, which is provided solely for information and is not restrictive, in which:
Figure 1 is a schematic plan view of the unit;
Figure 2 is a schematic view of the unit in section along the line II-II in Fig. 1.

With reference to the said figures, the number 1 indicates the whole of a box-shaped housing consisting, for example, of a quadrilateral hollow structure formed by the parts 2, 3, 4 and 5 and the bottom la.

The motor 6, designed to operate an intermittent drive which in itself is known and conventional, for example a machine-tool turret, to which the motor is coupled by means of the driving shaft 7, is fitted in the space enclosed by this structure.

The intermittent drive, whose structure does not need to be described for the purposes of the present invention, includes the wall 8 placed against the housing 1, the latter being designed to be attached to the said wall by conventional fixing means 8a.

In the structure formed by the parts 2, 3, 4 and 5, the motor 6 is positioned in such a way that its shaft 7 can be coupled directly, for example by means of a key 7c, to the input shaft 7a of the mechanical reduction unit forming part of the structure of the intermittent drive.

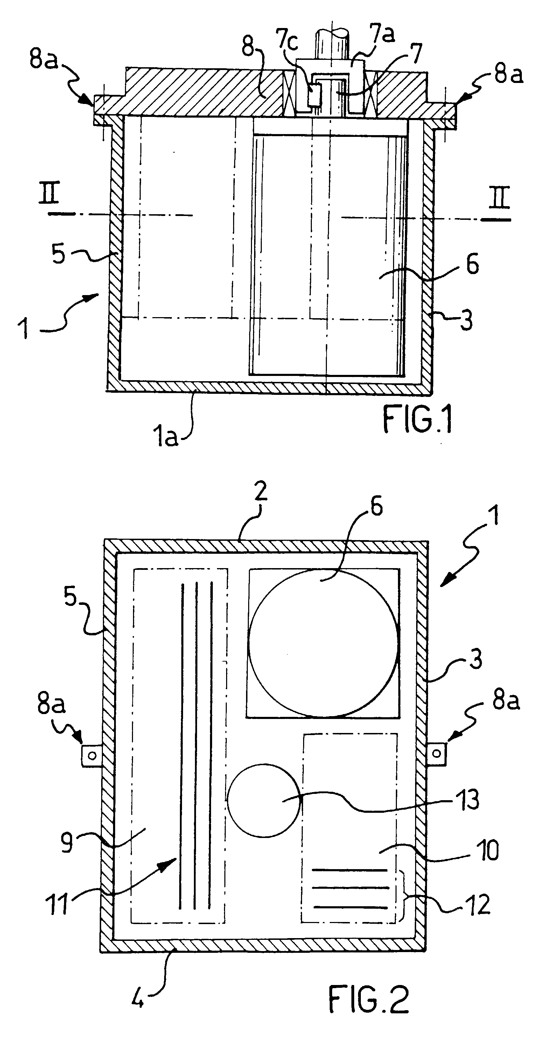

In the example shown in Figure 2, the motor 6 is in an off-centre position in the corner formed by the walls 2 and 3.

The electronic operating (11) and control (12) components, usually in the form of cards, are fitted in the said housing 1 in the spaces 9 and 10 left free by the motor 6.

A free space 13 is provided between the spaces 9 and 10 to allow for possible requirements, of wiring for example.

The operating unit according to the invention therefore provides the advantage of enclosing within a single supporting structure both the motor means and all the elements required for its operation and control, thus eliminating the disadvantages arising from any wiring between positions remote from each other, with a substantial reduction of the manufacturing and installation costs.

There is the additional advantage of having the essential functions for the operation of an intermittent drive available in the form of a single operating unit, while leaving the remaining functions, which are purely mechanical in nature, for example the support of tools and the mechanisms for their locking in and release from the operating positions if the intermittent drive is a machine-tool turret, in an operating unit which is independent but which can be physically coupled to the first unit. The integration of all the elements in a single support reduces the connections and wiring and enables the operating parameters to be optimized at the outset, relieving the user of this task.

The dimensions, the powers of the motors and the functions executed by the electronic operating and control means may evidently be varied to meet requirements, without thereby departing from the scope of the present invention as described above and as claimed below.

## Claims

1. Operating unit for intermittent drives in general, of the type comprising at least one stationary element made integral with the machine tool or machining centre, an element which can be moved between different operating positions spaced apart angularly or linearly, a mechanism for locking and releasing the moving element with respect to the stationary element, motor means to move the moving element from one operating position to another, motor means to operate the said locking and release mechanism, and finally electronic operating and control means to operate the motor means and to coordinate them in the sequence required by the operating program of the intermittent drive, characterized in that it comprises a box-shaped housing (1) in which are fitted at least the said motor means (6) for moving the moving element of the intermittent drive, together with the electronic operating (11) and control (12) components, the said box-shaped housing (1) being connectable mechanically to the intermittent drive (8).

2. Operating unit according to Claim 1, characterized in that the said motor means consist of an electric motor (6).

3. Operating unit according to Claims 1 and 2, characterized in that the said housing (1) consists of a quadrilateral hollow structure (2, 3, 4, 5), fixing means (8a) being provided for its connection to the structure of the said intermittent drive.

4. Operating unit according to Claims 1 and 2, characterized in that the said electric motor (6) is fitted on the said housing (1) in a position such that its driving shaft (7) is aligned with the power input shaft (7a) of the intermittent drive (8).

5. Operating unit according to Claim 1, characterized in that the said housing (1) comprises at least one space (13) which is free of components.

## Patentansprüche

1. Betriebseinheit für Schrittantriebe im allgemeinen, die im wesentlichen aus mindestens einem stationären, mit der Werkzeugmaschine oder dem Bearbeitungszentrum einstückig ausgebildeten Element besteht, aus einem zwischen verschiedenen Arbeitspositionen bewegbaren, winklig oder geradlinig voneinander beabstandeten Element, einem Mechanismus zum Arretieren und Lösen des in Bezug auf das stationäre Element beweglichen Elementes, einen Motor zum Bewegen des beweglichen Elementes von einer Arbeitsposition in die nächste, einen Motor zum Betreiben des Arretier- und Lösemechanismus sowie schließlich elektronische Betriebs- und Steuereinrichtungen zum Betrieb des Motors sowie zu dessen Koordinierung in der Reihenfolge, die für das Betriebsprogramm des Schrittantriebes erforderlich ist,
dadurch gekennzeichnet, daß
sie ein kastenförmiges Gehäuse (1) aufweist, in dem mindestens der Motor (6) zum Bewegen des Bewegungselementes des Schrittantriebes zusammen mit den elektronischen Betriebs(11) und Steuerelementen (12) angeordnet sind, wobei das kastenförmige Gehäuse (1) mechanisch mit dem Schrittantrieb (8) verbindbar ist.

2. Betriebseinheit nach Anspruch 1
dadurch gekennzeichnet, daß
der Motor ein Elektromotor (6) ist.

3. Betriebseinheit nach den Ansprüchen 1 und 2,
dadurch gekennzeichnet, daß
das Gehäuse (1) aus einer vierseitigen, hohlen Anordnung (2, 3, 4, 5) besteht und Befestigungsmittel (8a) zu dessen Verbindung mit der Anordnung des Schrittantriebes umfaßt.

4. Betriebseinheit nach den Ansprüchen 1 und 2,
dadurch gekennzeichnet, daß
der Elektromotor (6) am Gehäuse (1) so positioniert ist, daß seine Antriebswelle (7) mit der Leistungseingangswelle (7a) des Schrittantriebes (8) axial ausgerichtet ist.

5. Betriebseinheit nach Anspruch 1,
dadurch gekennzeichnet, daß
das Gehäuse (1) einen elementfreien Raum (13) aufweist.

## Revendications

1. Unité de fonctionnement pour mécanismes d'entraînement intermittents en général, du type comprenant au moins un élément immobile réalisé d'un seul tenant avec la machine-outil ou le centre d'usinage, un élément qui peut être déplacé entre différentes positions de fonctionnement écartées angulairement ou linéairement, un mécanisme pour verrouiller et déverrouiller l'élément mobile par rapport à l'élément immobile, un moyen formant moteur destiné à déplacer l'élément mobile d'une position de fonctionnement à une autre, un moyen formant moteur destiné à mettre en oeuvre ledit mécanisme de verrouillage et de déverrouillage, et enfin des moyens de mise en oeuvre et de commande destinés à mettre en oeuvre les moyens formant moteurs et à les coordonner dans la séquence exigée par le programme de fonctionnement du mécanisme d'entraînement intermittent, caractérisée en ce qu'elle comprend un boîtier (1) en forme de boîte dans lequel sont installés au moins ledit moyen (6) formant moteur destiné à déplacer l'élément mobile du mécanisme d'entraînement intermittent, de paire avec les composants de mise en oeuvre (11) et de commande (12) électroniques, ledit boîtier (1) en forme de boîte pouvant être relié mécaniquement au mécanisme d'entraînement (8) intermittent.

2. Unité de fonctionnement selon la revendication 1, caractérisée en ce que ledit moyen formant moteur est constitué d'un moteur électrique (6).

3. Unité de fonctionnement selon les revendications 1 et 2, caractérisée en ce que ledit boîtier (1) est constitué d'une structure creuse quadrilatérale (2, 3, 4, 5), des moyens de fixation (8a) étant prévus pour sa connexion à la structure dudit mécanisme d'entraînement intermittent.

4. Unité de fonctionnement selon les revendications 1 et 2, caractérisée en ce que ledit moteur électrique (6) est installé sur ledit boîtier (1) dans une position telle que son arbre moteur (7) est aligné avec l'arbre (7a) de puissance d'entrée du mécanisme d'entraînement intermittent (8).

5. Unité de fonctionnement selon la revendication 1, caractérisée en ce que ledit boîtier (1) comprend au moins un espace (13) qui est dépourvu de composants.
